(19) Europäisches Patentamt
European Patent Office
Office européen des brevets

(11) **EP 0 635 787 B1**

(12) **FASCICULE DE BREVET EUROPEEN**

(45) Date de publication et mention de la délivrance du brevet:
**20.01.1999 Bulletin 1999/03**

(51) Int Cl.⁶: **G06F 11/00**, G11B 19/04, G06F 3/06

(21) Numéro de dépôt: **94401575.9**

(22) Date de dépôt: **08.07.1994**

(54) **Dispositif enregistreur de données en environnement perturbé**

Datenaufzeichnungsvorrichtung in einer störungsbehafteten Umgebung

Data recorder device in a disturbed environment

(84) Etats contractants désignés:
**AT BE CH DE DK ES FR GB GR IE IT LI LU MC NL PT SE**

(30) Priorité: **19.07.1993 FR 9308830**

(43) Date de publication de la demande:
**25.01.1995 Bulletin 1995/04**

(73) Titulaire: **DASSAULT ELECTRONIQUE**
**F-92214 Saint-Cloud (FR)**

(72) Inventeur: **Meunier, Hugues**
**F-78690 Les Essarts le Roi (FR)**

(74) Mandataire: **Plaçais, Jean-Yves et al**
**Cabinet Netter,**
**40, rue Vignon**
**75009 Paris (FR)**

(56) Documents cités:
**US-A- 3 562 708        US-A- 3 848 262**
**US-A- 4 320 450        US-A- 4 580 222**
**US-A- 5 067 106**

- **IBM TECHNICAL DISCLOSURE BULLETIN, vol.30, no.6, Novembre 1986, ARMONK, NY, USA pages 81 - 82 'apparatus for detecting and correcting excessive vibration in a disk file'**
- **PATENT ABSTRACTS OF JAPAN vol. 6, no. 209 (P-150)(1087) 21 Octobre 1982 & JP-A-57 113 462 (NIPPON DENKI) 14 Juillet 1982**

## Description

L'invention se rapporte au domaine technique de l'enregistrement des données en environnement perturbé.

Actuellement, la technologie des disques magnétiques, optiques ou magnéto-optiques comme support d'enregistrement est utilisée limitativement dans un environnement bureautique.

Dans des conditions d'environnement plus sévères, notamment à bord d'un aéronef, cette technologie n'est pas satisfaisante dans la mesure où elle conduit à un enregistrement à tout le moins incorrect des données.

Le document US-A-5 067 106 révèle un dispositif enregistreur de données apte à enregistrer des données sur un support d'enregistrement de technologie magnétique comprenant un moyen à bloquer l'accès de la mémoire en cas de radiation environnementale excessive.

L'invention apporte une solution à ce problème.

Ainsi, le but de l'invention est de fournir un dispositif enregistreur de données apte à enregistrer correctement des données sur un support d'enregistrement de technologie magnétique et/ou optique et/ou magnéto-optique, en environnement perturbé, en particulier à bord d'un aéronef.

L'invention porte sur un dispositif enregistreur de données, comprenant :

- une interface propre à recevoir des données à enregistrer ;

- des moyens d'enregistrement reliés à l'interface et propres à enregistrer des données émanant de l'interface sur un support d'enregistrement de technologie magnétique et/ou optique et/ou magnéto-optique ; et

- une unité de commande propre à piloter l'enregistrement des données sur ledit support d'enregistrement.

Selon une définition générale de l'invention, le dispositif enregistreur comprend en outre :

Le document US-A-5 067 106 révèle un dispositif enregistreur de données apte à enregistrer des données sur un support d'enregistrement de technologie magnétique comprenant un moyen à bloquer l'accès de la mémoire en cas de radiation environnementale excessive.

- un support de sauvegarde temporaire de technologie électronique, les données provenant de l'interface étant enregistrées temporairement sur le support de sauvegarde temporaire successivement selon leur réception,

- des moyens propres à obtenir au moins une grandeur choisie relative à une condition d'environnement ou de fonctionnement prédéterminée dudit dispositif enregistreur ou de l'un au moins de ses moyens constitutifs, et à délivrer une donnée représentative de ladite grandeur obtenue, et

- l'unité de commande comprend un mode d'enregistrement dans lequel la grandeur obtenue est comparée à au moins une valeur prédéterminée, et

en présence d'une grandeur obtenue supérieure à ladite valeur prédéterminée, aucun accès au support d'enregistrement n'est autorisé, tandis qu'en présence d'une grandeur obtenue inférieure ou égale à ladite valeur prédéterminée, les données stockées temporairement sur le support de sauvegarde temporaire sont enregistrées sur le support d'enregistrement tant que l'accès audit support d'enregistrement est autorisé.

En pratique, la grandeur est relative à l'accélération subie par le dispositif enregistreur dans son ensemble ou par l'un au moins de ses moyens constitutifs, et les moyens d'obtention forment un accéléromètre disposé selon une relation géométrique prédéterminée par rapport aux axes sensibles dudit dispositif enregistreur, notamment des moyens d'enregistrement.

En complément ou en variante, la grandeur est relative à la température ambiante du dispositif enregistreur ou de l'un au moins de ses moyens constitutifs, notamment des moyens d'enregistrement et les moyens d'obtention forment un thermomètre disposé selon une relation géométrique prédéterminée par rapport audit dispositif enregistreur, notamment aux moyens d'enregistrement.

En variante, la donnée représentative de ladite grandeur obtenue est issue des données reçues au niveau de l'interface.

De plus, en variante ou en complément, la grandeur est relative à l'alimentation du dispositif enregistreur, les moyens d'obtention forment des moyens de détection de coupure d'alimentation, et il est prévu en outre des moyens d'alimentation propres à alimenter le support de sauvegarde temporaire.

Dans une application selon l'invention, le dispositif enregistreur est destiné à être embarqué dans un aéronef.

Avantageusement, les moyens d'enregistrement sont logés dans un boîtier.

Selon un mode de réalisation de l'invention, le dispositif enregistreur comprend en outre :

- un premier étrier en forme de U dont la base est propre à recevoir la face inférieure du boîtier, et dont les parois latérales sont fixées de façon amovible aux parois latérales du boîtier ;

- un second étrier en forme de U tourné dans le sens contraire est propre à couvrir la face supérieure du boîtier ; et

- des moyens de fixation élastiques disposés entre les parois latérales du premier étrier et celles du second étrier pour fixer de façon élastique le premier étrier au second étrier.

De préférence, les moyens de fixation élastiques comprennent une pluralité d'éléments de fixation chacun comprenant :

- une vis possédant une tête et une tige, ladite tige comprenant une extrémité filetée destinée à être enfoncée dans une paroi latérale du premier étrier,

- une première rondelle enfilée sur la tige jusqu'à un épaulement ménagé sur la tige à une hauteur prédéterminée,

- une pièce formant tampon enfilée sur la tige entre la première rondelle et la paroi latérale du premier étrier,

- un corps en forme de creuset dont les bords sont fixés sur une paroi latérale du second étrier, la tête de la vis ainsi qu'une partie de la tige étant logées dans le corps de façon flottante entre des premier et second points fixes espacés l'un de l'autre d'une distance prédéterminée, la tige traversant une ouverture ménagée dans le fond du creuset,

- une seconde rondelle enfilée sur la partie de la tige entre les premier et second points fixes, et

- au moins des première et seconde membranes constituées chacune d'un matériau présentant une propriété de rappel élastique appropriée à amortir les vibrations susceptibles d'être subies par les moyens d'enregistrement jusqu'à un niveau prédéterminé, lesdites première et seconde membranes étant logées dans le corps de part et d'autre de la seconde rondelle et prenant appui respectivement sur les faces de la seconde rondelle de manière à amortir les vibrations mécaniques de la tige entre les premier et second points fixes.

Avantageusement, le dispositif enregistreur comprend en outre des moyens de protection comprenant des moyens d'emmagasinage propres à emmagasiner provisoirement une tension d'alimentation et propres à délivrer ladite tension d'alimentation en présence de coupures d'alimentation d'une durée prédéterminée.

De préférence, la table de description des fichiers des données à enregistrer ainsi que la table racine sont sauvegardées dans le support de sauvegarde temporaire avant chaque enregistrement des données sur le support d'enregistrement.

De préférence, l'unité de commande est agencée pour piloter l'écriture des données sur le support d'enregistrement émanant du support de sauvegarde temporaire en fin du fichier contenant l'ensemble des données précédemment écrites dans le fichier.

Très avantageusement, l'unité de commande est agencée pour, aussitôt après l'écriture du bloc de données dans le support d'enregistrement, fermer le fichier ainsi complété, avec remise à jour des tables d'allocation de fichier et racine.

En pratique, la taille des blocs de données à écrire dans le support d'enregistrement et émanant du support de sauvegarde temporaire est choisie de manière appropriée.

Selon un autre aspect de l'invention, le dispositif enregistreur comprend en outre des moyens d'action propres à agir sur la grandeur obtenue et en ce qu'en présence d'une grandeur obtenue supérieure à ladite valeur prédéterminée, l'unité de commande délivre un signal de commande aux moyens d'action afin de ramener la grandeur obtenue sensiblement au-dessous de la valeur prédéterminée.

En pratique, les moyens d'action sont des amortisseurs actifs.

D'autres caractéristiques et avantages de l'invention apparaîtront à la lumière de la description détaillée ci-après et des dessins dans lesquels :

- la figure 1 est une représentation schématique des éléments essentiels du dispositif enregistreur selon l'invention ;

- la figure 2 est un organigramme illustrant l'enregistrement des données selon l'invention ;

- les figures 3 et 4 représentent schématiquement la fixation du support d'enregistrement sur le premier étrier selon l'invention ;

- les figures 5 à 8 sont des vues de la structure mécanique du dispositif enregistreur selon l'invention ; et

- les figures 9 et 10 représentent schématiquement des moyens de fixation élastiques selon l'invention.

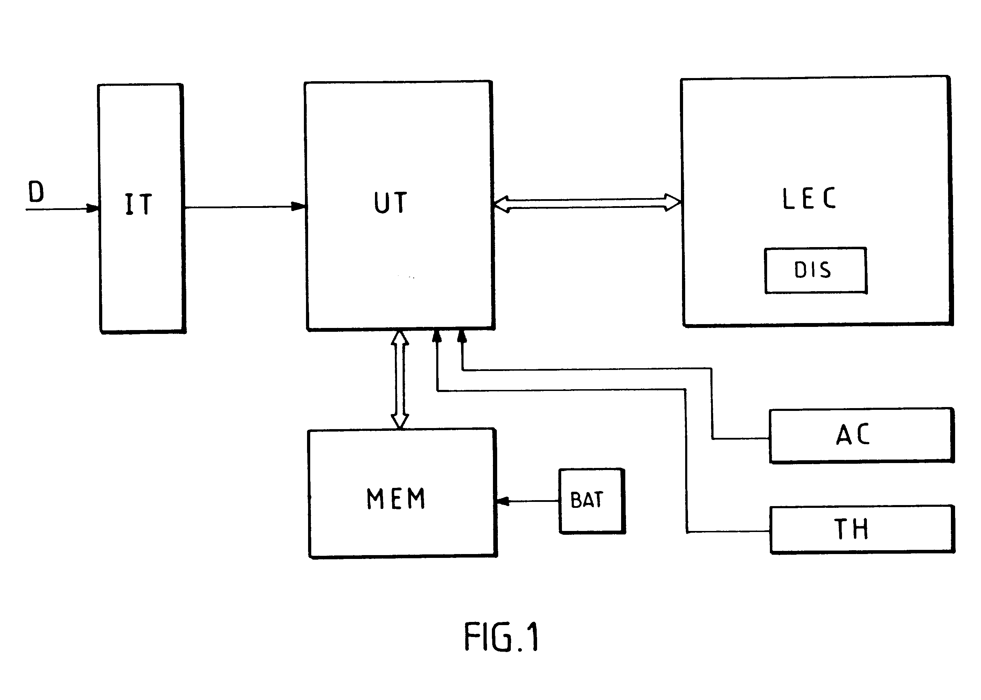

Sur la figure 1, les moyens connus du dispositif enregistreur de données comprennent :

- une interface IT propre à recevoir des données D à enregistrer ;

- des moyens d'enregistrement LEC reliés à l'interface IT et propres à enregistrer des données émanant de l'interface sur un support d'enregistrement DIS de technologie magnétique et/ou optique et/ou magnéto-optique ; et

- une unité de commande UT propre à piloter l'enregistrement des données sur ledit support d'enregistrement DIS.

Comme mentionné ci-avant, dans des conditions d'environnement sévères, notamment à bord d'un aéronef, la technologie des supports d'enregistrement tels que les disques magnétiques, magnéto-optiques ou optiques n'est pas satisfaisante dans la mesure où elle conduit le plus souvent à un enregistrement incorrect de données.

Pour remédier à cet inconvénient, le dispositif enregistreur selon l'invention comprend en outre :

- un support de sauvegarde temporaire MEM de technologie électronique ; les données provenant de l'interface étant enregistrées temporairement sur le support de sauvegarde temporaire successivement selon leur réception,

- des moyens AC et/ou TH propres à obtenir au moins une grandeur choisie relative à une condition d'environnement ou de fonctionnement prédéterminée du dispositif enregistreur ou de l'un au moins de ses moyens constitutifs, et à délivrer une donnée représentative de ladite grandeur obtenue à un instant donné.

Par exemple, la grandeur est relative à l'accélération subie par le dispositif enregistreur dans son ensemble ou par l'un au moins de ses moyens constitutifs et les moyens d'obtention AC forment un accéléromètre disposé selon une relation géométrique prédéterminée par rapport aux axes sensibles aux accélérations dudit dispositif enregistreur, notamment des moyens d'enregistrement LEC.

En variante, la donnée représentative de ladite grandeur obtenue est issue des données reçues au niveau de l'interface.

En outre ou en variante, la grandeur est relative à la température ambiante du dispositif enregistreur ou de l'un au moins de ses moyens constitutifs et les moyens d'obtention TH forment en outre un thermomètre disposé selon une relation géométrique prédéterminée par rapport au dispositif enregistreur, notamment les moyens d'enregistrement LEC.

De plus, il est prévu des moyens d'alimentation BAT, propres à alimenter le support de sauvegarde temporaire MEM.

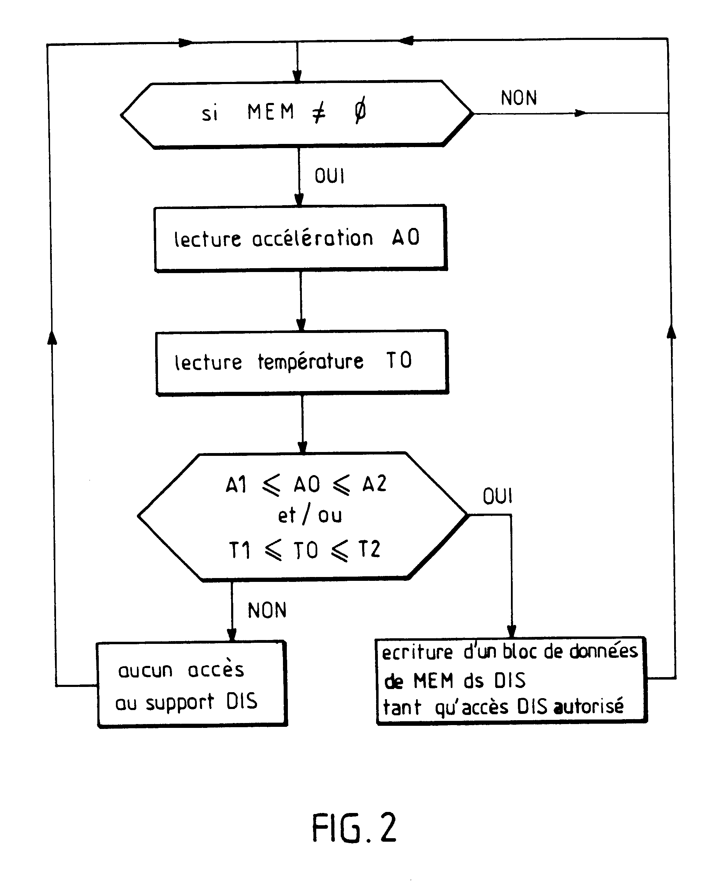

En référence à la figure 2, l'unité de commande comprend un mode de fonctionnement comprenant les étapes suivantes :

Lors de l'étape 1), lorsque la mémoire de sauvegarde temporaire MEM n'est pas vide, il est prévu de lire la grandeur obtenue A0 délivrée par les moyens formant accéléromètre à un instant donné.

Lors de l'étape 2), il est prévu de lire, le cas échéant, la grandeur obtenue T0 délivrée par les moyens formant thermomètre à un instant donné.

Lors de l'étape 3), il est prévu de comparer les valeurs obtenues A0 et T0 à des valeurs prédéterminées A2 et/ou T2.

En variante, il est prévu de vérifier si ces valeurs A0 ou T0 appartiennent aux plages A1-A2 et/ou T1-T2.

Dans l'étape 4), en présence d'une grandeur obtenue supérieure à ladite valeur prédéterminée A2 et/ou T2, ou n'appartenant pas aux plages A1-A2 et/ou T1-T2, aucun accès au support d'enregistrement DIS n'est autorisé.

Dans l'étape 5), en présence d'une grandeur A0 et/ou T0 inférieure ou égale à ladite valeur prédéterminée A2 et/ou T2, ou appartenant aux plages A1-A2 et/ou T1-T2, les données stockées temporairement sur le support de sauvegarde temporaire MEM sont enregistrées, par blocs de données de 8 kilo-octets par exemple, sur le support d'enregistrement DIS tant que l'accès audit support d'enregistrement est autorisé.

En pratique, le support de sauvegarde temporaire MEM est une mémoire à semi-conducteurs, de type RAM, EEPROM ou flash.

La capacité de cette mémoire MEM est choisie pour permettre le stockage de l'ensemble des données à mémoriser pendant la plus longue période où le support d'enregistrement peut se trouver en dehors de son domaine de fonctionnement.

Par exemple, la capacité de la mémoire est de l'ordre de 1,5 méga-octet .

Par ailleurs, le support d'enregistrement DIS est par exemple en technologie magnéto-optique, tel que celui vendu par la Société IBM, sous la référence MD3125B.

Selon l'invention, la technologie des disques magnéto-optiques, qui n'est à l'heure actuelle compatible qu'avec un environnement bureautique, devient avantageusement compatible dans des conditions d'environnement plus sévères, par exemple à bord d'un aéronef.

Par exemple, pour permettre un enregistrement correct des données sur le support d'enregistrement DIS en technologie magnéto-optique, malgré des accélérations linéaires subies par ledit support, supérieures à celles qu'il peut accepter, le dispositif enregistreur comprend au moins un accéléromètre AC et un support de sauvegarde temporaire MEM sont associés à une unité de commande ayant un mode de fonctionnement décrit en référence à la figure 2.

Plus précisément, dès que le dispositif enregistreur subit des accélérations telles qu'il se trouve en dehors de son domaine de fonctionnement, aucun accès au dispositif d'enregistrement n'est effectué.

Lorsque les conditions d'environnement redeviennent normales, c'est-à-dire lorsque les accélérations sont plus faibles laissant le dispositif enregistreur, notamment les moyens d'enregistrement, dans leur plage de fonctionnement, les données temporairement mémorisées en mémoire à semi-conducteurs MEM sont écrites sur le support d'enregistrement DIS.

Par ailleurs, toutes nouvelles données reçues par le dispositif enregistreur pour enregistrement sont également mémorisées dans cette mémoire électronique MEM.

Bien évidemment, ce mode de fonctionnement à base de mesures et de comparaisons s'applique à toutes grandeurs relatives aux conditions d'environnement ou en fonctionnement du dispositif enregistreur ou de l'un au moins de ses moyens constitutifs, par exemple l'accélération, la température, etc.

Un autre problème peut également intervenir, par exemple à bord d'un aéronef, il s'agit des coupures temporaires d'alimentation dont la durée est supérieure à celles qui sont masquées par le module d'alimentation interne du dispositif de l'aéronef.

L'invention apporte également une solution à ce problème.

Plus précisément, le dispositif enregistreur comprend des circuits de détection (non représentés) de variations d'alimentation signalant les coupures et les retours d'alimentation du module d'alimentation interne du dispositif (non représenté).

Associés à ces circuits de détection, il est prévu d'utiliser le support de sauvegarde temporaire MEM décrit ci-avant, par exemple à semi-conducteurs alimenté par des piles ou des batteries BAT et un algorithme logiciel permettant l'enregistrement des données selon le mode dont les étapes sont les suivantes.

Tout d'abord, toute donnée émanant de l'interface IT à enregistrer sur le support d'enregistrement DIS est temporairement mémorisée dans le support de sauvegarde temporaire MEM avant d'être écrite sur le support d'enregistrement.

Dès qu'une coupure d'alimentation est détectée par les circuits de détection, l'ensemble des données non encore écrites sur le support d'enregistrement DIS reste stocké dans le support de sauvegarde temporaire MEM.

Avantageusement, dans ce support de sauvegarde temporaire est également conservée une copie de la table de description des fichiers FAT pour "File Allocation Table" qui décrit les secteurs alloués pour chacun des fichiers et de la table racine "ROOT" qui décrit les paramètres généraux tels que nom, numéro du premier secteur, longueur, ... de chacun des fichiers ou sous-répertoires. Cette conservation permet de pouvoir restituer ces tables correctement lors de la reprise d'alimentation.

Lorsque l'alimentation revient, l'enregistrement sur le support d'enregistrement des données conservées dans le support de sauvegarde temporaire reprend.

Toutes nouvelles données reçues par le dispositif enregistreur pour enregistrement sont également mémorisées dans le support de sauvegarde temporaire.

Avantageusement, pour garantir l'intégrité des données enregistrées par l'équipement lors des coupures d'alimentation, il est prévu en outre une protection matérielle par des réserves d'énergie permettant de filtrer les micro-coupures inférieures à 100 millisecondes par exemple.

Avantageusement, la protection matérielle est faite à l'aide de capacités réservoirs (non représentées).

Cette protection matérielle vient s'ajouter à la protection logicielle décrite ci-avant, ainsi qu'à la sauvegarde dans la mémoire MEM de table de description des fichiers et de la table racine.

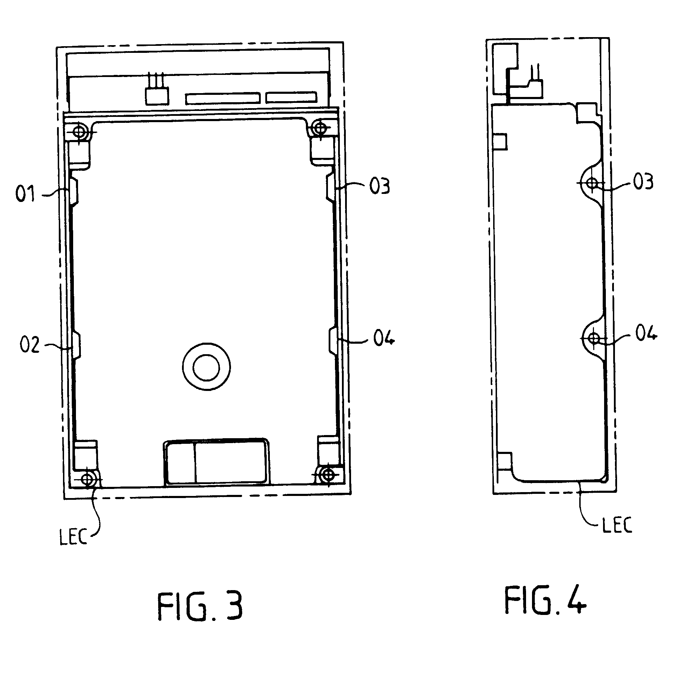

En référence aux figures 3 et 4, il est décrit la fixation des moyens d'enregistrement à bord d'un dispositif embarqué dans un aéronef.

Selon un aspect de l'invention, les moyens d'enregistrement tel que le lecteur magnéto-optique MD3125B est logé dans un boîtier de forme générale parallélépipédique.

Il est destiné à être fixé à l'aide de quatre trous de fixation latéraux 01 à 04 ménagés dans les parois latérales du boîtier.

Le premier étrier ETI profilé en U, reçoit la partie inférieure du boîtier. Les parois latérales du premier étrier ETI sont fixées de façon amovible aux parois latérales du boîtier à l'aide des trous de fixation 01 à 04.

Toutefois, la rigidité de base de ce cadre n'est pas suffisante et introduit des résonances parasitaires.

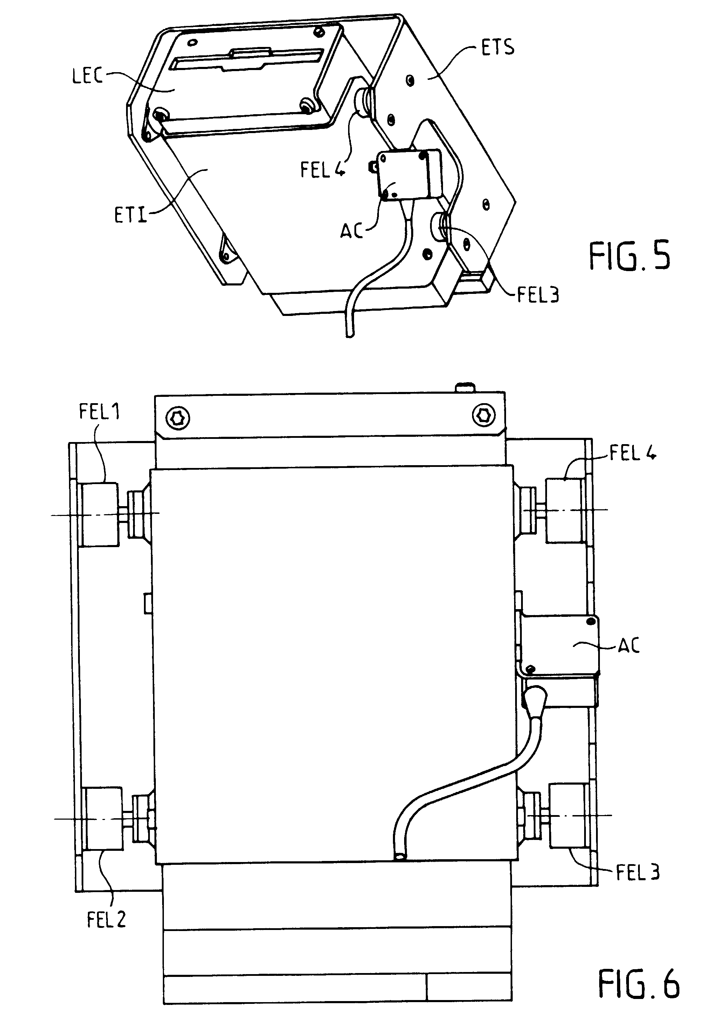

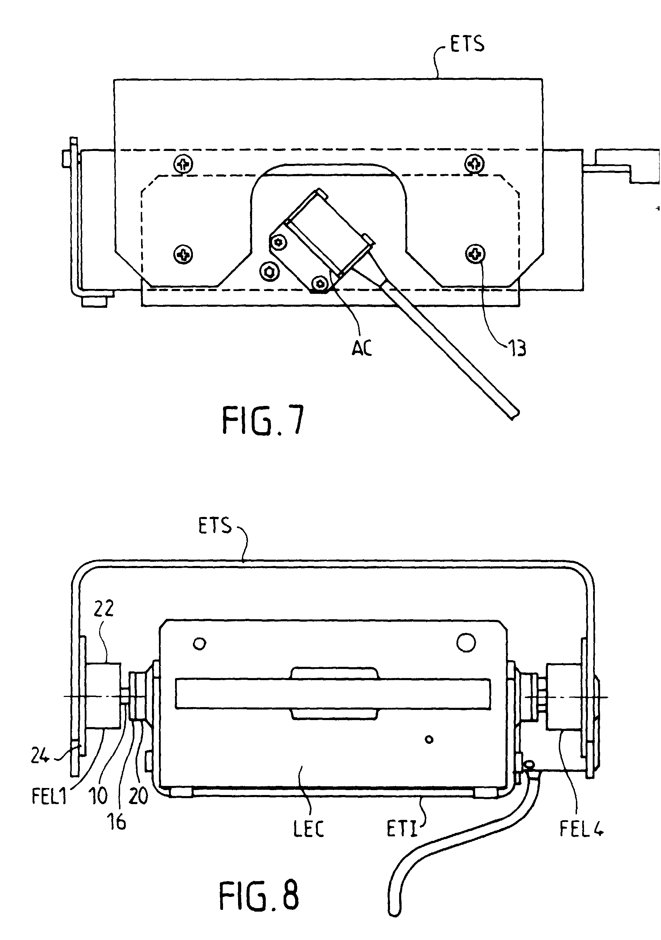

L'invention apporte également une solution à ce problème à l'aide d'un dispositif comprenant les moyens suivants (figures 5 à 8) :

- un second étrier ETS profilé en U, propre à couvrir la partie supérieure du boîtier ;

- des moyens de fixation FEL1 à FEL4 disposés entre les parois latérales du premier étrier ETI et celles du second étrier ETS, et propres à fixer de façon élastique le premier étrier ETI au second étrier ETS.

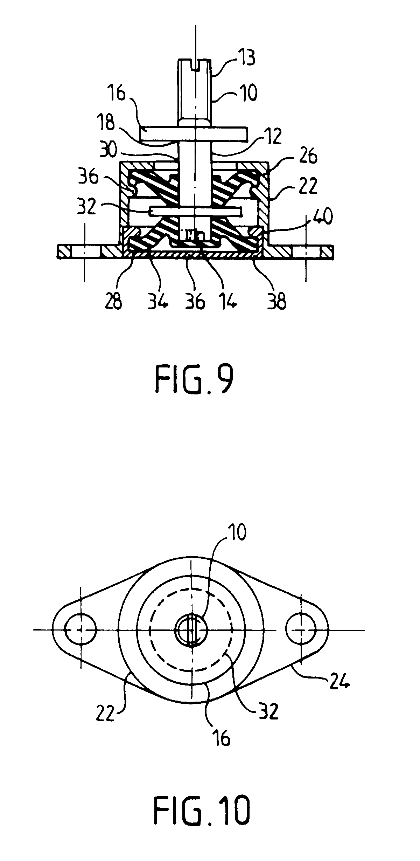

En référence aux figures 9 et 10, il est décrit maintenant les moyens de fixation élastiques.

Chaque élément FEL1 à FEL4 des moyens de fixation élastiques comprend :

- une vis 10 possédant une tête 14 et une tige 12, ladite tige 12 comprenant une extrémité filetée 13 destinée à être enfoncée dans une paroi latérale du premier étrier ETI ;

- une première rondelle 16 enfilée sur la tige 12 jusqu'à un épaulement 18 ménagé sur la tige 12 à une hauteur prédéterminée ;

- une pièce 20 formant tampon enfilée sur la tige entre la première rondelle 16 et la paroi latérale du premier étrier ETI ;

- un corps 22 en forme de creuset dont les bords 24 sont fixés sur une paroi latérale du second étrier ETS, la tête 14 de la vis ainsi qu'une partie de la tige étant logées dans le corps 22 de façon flottante entre deux points fixes 26, 28 espacés l'un de l'autre d'une distance prédéterminée, la tige traversant une ouverture 30 ménagée dans le fond du creuset ;

- une seconde rondelle 32 enfilée sur la partie de la tige entre les deux points fixes 26 et 28 ; et

- au moins des première et seconde membranes 34 et 36 constituées chacune d'un matériau présentant une propriété de rappel élastique appropriée à amortir les vibrations d'un niveau prédéterminé susceptibles d'être subies par le support d'enregistrement DIS, lesdites première et seconde membranes 34 et 36 étant logées dans le corps 22 de part et d'autre de la seconde rondelle 32 et prenant appui respectivement sur les faces de la seconde rondelle 32 de manière à amortir les vibrations mécaniques de la tige entre les deux points fixes.

Par exemple, chaque élément de fixation élastique est vendu sous la référence 567-GS-01 par la Société GAMMA (Société française).

Par ailleurs, le creuset 22 est fermé par un couvercle 38 collé sur les bords internes 40 du creuset 22.

Ces éléments de fixation assurent la reprise mécanique du boîtier et des étriers ETI et ETS, vers la structure mécanique de l'équipement.

Sur les figures 5 à 8, on a représenté un accéléromètre AC, par exemple celui vendu par la Société EURO SENSOR sous la référence 3145-02. Il est ici fixé sur l'étrier de rigidification ETS des moyens d'enregistrement LEC logés dans le boîtier.

L'accéléromètre AC mesure les accélérations résiduelles suivant les axes sensibles des moyens d'enregistrement LEC.

Selon un mode de réalisation de l'invention, il est prévu deux accéléromètres AC disposés selon une relation géométrique prédéterminée, par exemple orthogonale l'un par rapport à l'autre pour mesurer les accélérations du dispositif enregistreur selon deux axes perpendiculaires.

En variante, les accélérations sont mesurées par un seul accéléromètre AC disposé selon lesdites accélérations.

En pratique, en présence d'une seule accélération, l'accéléromètre AC est disposé dans l'axe de ladite accélération tandis qu'en présence de deux accélérations orthogonales l'une à l'autre, l'accéléromètre AC est disposé selon un angle compris entre 30 et 60° par rapport à l'étrier ETS, par exemple.

Par exemple, les membranes 34 et 36 sont constituées d'un matériau du type silicone.

Pour ce qui concerne les sondes de température, elles sont au nombre de deux, du type thermorésistances et disposées à proximité des moyens d'enregistrement LEC.

Selon un mode de réalisation préféré de l'invention, l'écriture des données sur le support d'enregistrement DIS en technologie magnéto-optique émanant de la mémoire temporaire MEM est effectuée en fin du fichier contenant l'ensemble des données précédemment écrites dans ce fichier. La fermeture du fichier est effectuée aussitôt après l'écriture du bloc, avec remise à jour des tables description des fichiers (FAT) et des fichiers racines (ROOT).

Dans ces conditions, le fichier ainsi complété forme un tout cohérent.

Il en résulte qu'à tout moment l'ensemble des données inscrites sur le support d'enregistrement DIS est exploitable. En d'autres termes, il s'agit d'une gestion du fichier "en temps réel".

Ceci est un avantage important dans la mesure où une telle gestion permet une extraction ou une relecture du support d'enregistrement DIS à tout moment.

Elle permet aussi d'utiliser plusieurs fichiers pour l'enregistrement des données. Cela est avantageux notamment dans l'application de l'enregistrement de données par vol, avec l'attribution par exemple d'un fichier donné à un vol donné.

Il est à remarquer que les fichiers écrits sur le support d'enregistrement DIS sont de préférence au format DOS pour "Disk Operating System".

En pratique, l'écriture s'effectue bloc par bloc par l'intermédiaire d'une instruction "écriture ajout" (WRITE APPEND) du bloc dans le fichier et d'une instruction "fermeture" (close) du fichier ainsi complété, avec mise à jour de la table racine ROOT et de la table de description des fichiers FAT.

Par ailleurs, le nombre d'écritures sur un même secteur du support d'enregistrement peut être limité, par exemple à $10^6$ réécritures.

Dans ces conditions, il convient de dimensionner la taille des blocs de données à écrire dans le support DIS d'enregistrement selon une formule que l'on décrira ci-après pour permettre la gestion en temps réel des fichiers décrite ci-avant, sans dépasser cette limite.

Le dimensionnement du bloc de données TB en octets est fonction des paramètres suivants (du point de vue de la table FAT) :

$$NRFAT \,.\, NRD \leq NRMAX$$

NRMAX étant le nombre maximum de réécritures d'un même secteur sans risques de détériorer ce secteur,

NRFAT étant le nombre maximum de réécritures d'un même secteur de la table FAT pendant un remplissage du support d'enregistrement,

NRD étant le nombre de remplissages du support d'enregistrement pendant toute la durée d'exploitation.

avec, ici, par exemple

$$NRD = 3600 \,.\, HV. \; DE \,.\, \frac{din}{com \,.\, VD. \; 10^6}$$

HV étant le nombre d'heures de fonctionnement par an,

DE étant la durée d'exploitation en années,

din étant le débit des données à enregistrer en octets par seconde,

VD étant la capacité du support d'enregistrement en mégaoctets, et com étant le coefficient d'occupation moyen du support d'enregistrement en pourcent,

avec, ici, par exemple :

$$NRFAT = \frac{Ts \,.\, NSc \,.\, Ts}{Nac \,.\, TB}$$

Ts étant la taille d'un secteur en octets,

NSc étant le nombre de secteurs par cluster,

Nac étant le nombre d'octets pour décrire l'allocation d'un secteur ou "cluster" en octets.

Dans ces conditions, la taille du bloc de données TB doit être supérieure ou égale à :

$$TB \geq \frac{Ts \,.\, NSc \,.\, Ts \,.\, 3600 \,.\, HV \,.\, DE \,.\, din}{Nac \,.\, com \,.\, VD \,.\, 10^6 \,.\, NRMAX}$$

Par ailleurs, la taille TB est fonction des paramètres suivants (du point de vue de la table racine ROOT) :

$$\frac{NESROOT}{NSUROOT} \leq NRMAX$$

NESROOT étant le nombre d'écritures du même secteur du fichier ROOT, NSUROOT étant le nombre minimum de secteurs utilisés dans le fichier ROOT, avec, ici,

$$NESROOT = 3600 \,.\, HV \,.\, DE \,.\, din/TB$$

et

$$NSUROOT = 1 + \text{partie entière de } INFMIN/NFROOTI$$

NFMIN étant le nombre minimum de fichiers sur le support d'enregistrement, et

NFROOT étant le nombre de fichiers décrits par secteur du fichier ROOT,

avec

$$NFMIN = \frac{com \,.\, VD \,.\, 10^6}{din \,.\, TEMAX \,.\, 3600}$$

et

$$NFROOT = \frac{Ts}{NSF}$$

TEMAX étant égal au temps maximum d'exploitation du même fichier en heures et NSF étant le nombre d'octets pour décrire un fichier dans le fichier ROOT en octets.

Dans ces conditions, la taille du bloc de données TB doit être supérieure ou égale à :

$$TB \geq \frac{3600 \,.\, HV \,.\, DE \,.\, din}{NRMAX \,.\, 1 + pe \left| \dfrac{com \,.\, VD \,.\, 10^6 \; NSF}{din \,.\, TEMAX \,.\, 3600 \; Ts} \right|}$$

Il est à remarquer qu'afin de minimiser au mieux le nombre de données non encore inscrites sur le support d'enregistrement lors de sa lecture ou de son retrait, les écritures doivent s'effectuer le plus souvent possible ; la taille doit donc être, tout en respectant dans la limite du possible les conditions précédentes, la plus faible possible. Néanmoins, elle doit être au moins égale au granule d'écriture, c'est-à-dire un cluster.

Il en résulte que la taille TB est prise avantageusement égale à environ 8 kilooctets, avec HV de l'ordre de 2000 heures par an, DE l'ordre de un à dix ans, din de l'ordre de 128 à 1024 octets par seconde, VD de l'ordre de 120 mégaoctets, com de l'ordre de 0,7, TS l'ordre de 512 octets, NSC de l'ordre de 4, Nac de l'ordre de 2, TEMAX de l'ordre de 8 à 12 heures et NSF de l'ordre de 32 octets.

Il est à noter que l'ensemble des mécanismes décrits ci-avant a pour objet d'utiliser un support d'enregistrement non prévu pour les conditions d'environnement sévères, puisqu'il s'agit par exemple d'un disque magnéto-optique vendu dans le commerce et que les conditions d'environnement sont très différentes de l'usage bureautique, par exemple un environnement de type embarqué.

Ainsi, les mécanismes décrits ci-avant, notamment concernant la prise en compte de la grandeur accélération rendent improbable la génération de secteurs défectueux qui peuvent arriver quand une erreur matérielle (hard error) est générée pendant l'écriture d'un secteur lors d'une perturbation mécanique.

Selon un autre mode de réalisation de l'invention, le dispositif comprend en outre des moyens d'action propres à agir sur la grandeur mesurée et en présence d'une grandeur mesurée supérieure à la valeur prédéterminée, l'unité de commande délivre un signal de commande auxdits moyens d'action afin de ramener la grandeur mesurée jusqu'à sensiblement au-dessous de la valeur prédéterminée.

Dans ce cas, l'accès au support d'enregistrement reste ou redevient autorisé et les données peuvent être enregistrées sans risque de mauvaise écriture lors d'une perturbation mécanique par exemple.

Par exemple, les moyens d'action sont des amortisseurs actifs permettant de limiter les effets d'une perturbation. Ces amortisseurs diminuent dynamiquement les vibrations subies par le dispositif enregistreur ou l'un au moins de ses éléments constitutifs. Ils sont par exemple de type hydraulique ou pneumatique.

## Revendications

1. Dispositif enregistreur de données, comprenant:

   - une interface (IT) propre à recevoir des données (D) à enregistrer,

   - des moyens d'enregistrement (LEC) propres à enregistrer des données provenant de l'interface (IT) sur un support d'enregistrement (DIS) de technologie magnétique et/ou optique et/ou magnéto-optique et comprenant une unité de commande (UT) propre à piloter l'enregistrement desdites données sur le support d'enregistrement (DIS),

   caractérisé en ce que il comprend en outre

   - un support de sauvegarde temporaire (MEM) de technologie électronique, les données (D) provenant de l'interface (IT) étant enregistrées temporairement sur le support de sauvegarde temporaire (MEM) successivement selon leur réception,

   - des moyens (AC, TH) propres à obtenir au moins une grandeur choisie relative à une condition d'environnement ou de fonctionnement prédéterminée dudit dispositif enregistreur ou de l'un au moins de ses moyens constitutifs, et à délivrer une donnée représentative de ladite grandeur obtenue (AO, TO), et

   - en ce que l'unité de commande (UT) comprend un mode d'enregistrement dans lequel la grandeur obtenue (AO, TO) est comparée à au moins une valeur prédéterminée (A2, T2), et

   en présence d'une grandeur obtenue supérieure à ladite valeur prédéterminée, aucun accès au support d'enregistrement (DIS) n'est autorisé, tandis qu'en présence d'une grandeur obtenue inférieure ou égale à ladite valeur prédéterminée, les données stockées temporairement sur le support de sauvegarde temporaire (MEM) sont enregistrées sur le support d'enregistrement (DIS) tant que l'accès audit support d'enregistrement est autorisé.

2. Dispositif selon la revendication 1, caractérisé en ce que la grandeur est relative à l'accélération subie par le dispositif enregistreur ou par l'un au moins de ses moyens constitutifs et en ce que les moyens d'obtention (AC) forment un accéléromètre disposé selon une relation géométrique prédéterminée par rapport aux axes sensibles du dispositif enregistreur, en particulier des moyens d'enregistrement (LEC).

3. Dispositif selon la revendication 1, caractérisé en ce que la grandeur est relative à la température ambiante du dispositif enregistreur ou de l'un au moins de ses moyens constitutifs, en particulier des moyens d'enregistrement (LEC) et en ce que les moyens d'obtention forment un thermomètre (TH) disposé selon une relation géométrique prédéterminée par rapport audit dispositif enregistreur ou de l'un de ses moyens constitutifs, en particulier aux moyens d'enregistrement (LEC).

4. Dispositif selon la revendication 1, caractérisé en ce que la donnée représentative de ladite grandeur obtenue (AO, TO) est issue des données reçues au niveau de l'interface.

5. Dispositif selon la revendication 1, caractérisé en ce que la grandeur est relative à l'alimentation du dispositif, en ce que les moyens d'obtention forment des moyens de détection de coupure d'alimentation, et en ce qu'il est prévu en outre des moyens d'alimentation (BAT) propres à alimenter le support de sauvegarde temporaire (MEM).

6. Dispositif selon l'une des revendications précédentes, caractérisé en ce qu'il est destiné à être embarqué dans un aéronef.

7. Dispositif selon l'une des précédentes revendications, caractérisé en ce que les moyens d'enregistrement (LEC) sont logés dans un boîtier.

8. Dispositif selon la revendication 7, caractérisé en ce qu'il comprend en outre :

   - un premier étrier (ETI) en forme de U dont la base est propre à recevoir la face inférieure du boîtier, et dont les parois latérales sont fixées de façon amovible aux parois latérales du boîtier ;

   - un second étrier (ETS) en forme de U tourné dans le sens contraire est propre à couvrir la face supérieure du boîtier ; et

   - des moyens de fixation élastiques (FEL1 à FEL4) disposés entre les parois latérales du premier étrier (ETI) et celles du second étrier (ETS) pour fixer de façon élastique le premier étrier au second étrier.

9. Dispositif selon la revendication 8, caractérisé en ce que les moyens de fixation élastiques (FEL1 à FEL4) comprennent une pluralité d'éléments de fixation chacun comprenant :

- une vis (10) possédant une tête (14) et une tige (12), ladite tige comprenant une extrémité filetée destinée à être enfoncée dans une paroi latérale du premier étrier (ETI),

- une première rondelle (14) enfilée sur la tige (12) jusqu'à un épaulement (18) ménagé sur la tige (12) à une hauteur prédéterminée,

- une pièce (20) formant tampon enfilée sur la tige entre la première rondelle (165) et la paroi latérale du premier étrier,

- un corps (22) en forme de creuset dont les bords sont fixés sur une paroi latérale du second étrier (ETS), la tête de la vis ainsi qu'une partie de la tige étant logées dans le corps (22) de façon flottante entre des premier et second points fixes espacés l'un de l'autre d'une distance prédéterminée, la tige traversant une ouverture (30) ménagée dans le fond du creuset,

- une seconde rondelle (32) enfilée sur la partie de la tige entre les des premier et second points fixes (26 et 28), et

- au moins des première et seconde membranes (34 et 36) constituées chacune d'un matériau présentant une propriété de rappel élastique appropriée à amortir les vibrations susceptibles d'être subies par les moyens d'enregistrement jusqu'à un niveau prédéterminé, lesdites première et seconde membranes (34 et 36) étant logées dans le corps de part et d'autre de la seconde rondelle (32) et prenant appui respectivement sur les faces de la seconde rondelle de manière à amortir les vibrations mécaniques de la tige entre les premier et second points fixes.

10. Dispositif selon l'une des précédentes revendications, caractérisé en ce qu'il comprend en outre des moyens de protection comprenant des moyens d'emmagasinage propres à emmagasiner provisoirement une tension d'alimentation et propres à délivrer ladite tension d'alimentation en présence de coupures d'alimentation d'une durée prédéterminée.

11. Dispositif selon l'une des précédentes revendications, caractérisé en ce que la table de description des fichiers (FAT) des données à enregistrer ainsi que la table racine (ROOT) sont sauvegardées dans le support de sauvegarde temporaire (MEM) avant chaque enregistrement des données sur le support d'enregistrement (DIS).

12. Dispositif selon l'une des revendications précédentes, caractérisé en ce que l'unité de commande est agencée pour piloter l'écriture des données sur le support d'enregistrement (DIS) émanant du support de sauvegarde temporaire (MEM) en fin du fichier contenant l'ensemble des données précédemment écrites dans le fichier.

13. Dispositif selon la revendication 12, caractérisé en ce que l'unité de commande est agencée pour, aussitôt après l'écriture du bloc de données dans le support d'enregistrement (DIS), fermer le fichier ainsi complété, avec remise à jour des tables d'allocation de fichier (FAT) et racine (ROOT).

14. Dispositif selon l'une quelconque des revendications précédentes, caractérisé en ce que la taille des blocs de données à écrire dans le support d'enregistrement (DIS) et émanant du support de sauvegarde temporaire (MEM) est choisie de manière appropriée.

15. Dispositif selon l'une quelconque des revendications précédentes, caractérisé en ce qu'il comprend en outre des moyens d'action propres à agir sur la grandeur obtenue et en ce qu'en présence d'une grandeur obtenue supérieure à ladite valeur prédéterminée, l'unité de commande délivre un signal de commande aux moyens d'action afin de ramener la grandeur obtenue sensiblement au-dessous de la valeur prédéterminée.

16. Dispositif selon la revendication 15, caractérisé en ce que les moyens d'action sont des amortisseurs actifs.

**Patentansprüche**

1. Datenaufzeichnungsvorrichtung, aufweisend:

- eine Schnittstelle (IT) zum Empfangen von aufzuzeichnenden Daten (D),
- Aufzeichnungsmittel (LEC) zum Aufzeichnen der von der Schnittstelle (IT) herrührenden Daten auf einem magnetischen und/oder optischen und/oder magnetooptischen Aufzeichnungsträger (DIS) und aufweisend eine Steuereinheit (UT) zum Steuern der Aufzeichnung der Daten auf den Aufzeichnungsträger (DIS),

dadurch gekennzeichnet, daß sie außerdem aufweist

- einen elektronischen Träger (MEM) zum vorübergehenden Sichern, wobei die Daten (D), die von der Schnittstelle (IT) herrühren, vorübergehend auf dem Träger (MEM) zum vorübergehenden Sichern nacheinander entsprechend ihrem Eintreffen aufgezeichnet werden,

- Mittel (AC, TH) zum Gewinnen von zumindest einer Größe, die in bezug auf eine Umgebungsbedingung oder eine vorbestimmte Funktionsbedingung der Aufzeichnungsvorrichtung oder von zumindest einem ihrer Bestandteile gewählt ist, und zum Liefern eines Datums, welches die gewonnene Größe (AO, TO) darstellt, und

- daß die Steuereinheit (UT) einen Aufzeichnungsmodus umfaßt, in welchem die gewonnene Größe (AO, TO) mit zumindest einem vorbestimmten Wert (A2, T2) verglichen wird, und

bei Vorliegen einer gewonnenen Größe, die größer als der vorbestimmte Wert ist, Sperren jeglichen Zugriffs auf den Aufzeichnungsträger (DIS), bis zum Vorliegen einer gewonnenen Größe, die kleiner oder gleich als der vorbestimmte Wert ist, wobei die vorübergehend auf dem Träger (MEM) zum vorübergehenden Sichern gespeicherten Daten auf dem Aufzeichnungsträger (DIS) aufgezeichnet werden, solange der Zugriff zu dem Aufzeichnungsträger freigegeben ist.

2. Vorrichtung nach Anspruch 1, dadurch gekennzeichnet, daß die Größe eine Funktion der Beschleunigung ist, welcher die Aufzeichnungsvorrichtung oder zumindest eines ihrer Bestandteile unterliegt, und daß die Gewinnungsmittel (AC) einen Beschleunigungsmesser bilden, der entsprechend einer geometrischen Beziehung angeordnet ist, die im voraus unter bezug auf empfindliche Achsen der Aufzeichnungsvorrichtung insbesondere der Aufzeichnungsmittel (LEC) angeordnet ist.

3. Vorrichtung nach Anspruch 1, dadurch gekennzeichnet, daß die Größe eine Funktion der Umgebungstemperatur der Aufzeichnungsvorrichtung oder von zumindest einem ihrer Bestandteile ist, insbesondere von den Aufzeichnungsmitteln (LEC), und daß die Gewinnungsmittel ein Thermometer (TH) bilden, das entsprechend einer geometrischen Beziehung angeordnet ist, die im voraus unter bezug auf empfindliche Achsen der Aufzeichnungsvorrichtung insbesondere der Aufzeichnungsmittel (LEC) angeordnet ist.

4. Vorrichtung nach Anspruch 1, dadurch gekennzeichnet, daß das die gewonnene Größe (AO, TO) wiedergebende Datum von Daten ausgegeben wird, die auf dem Niveau der Schnittstelle empfangen werden.

5. Vorrichtung nach Anspruch 1, dadurch gekennzeichnet, daß die Größe eine Funktion der Stromversorgung der Vorrichtung ist, daß die Gewinnungsmittel Mittel zur Ermittlung einer Unterbrechung der Stromversorgung bilden, und daß außerdem Stromversorgungsmittel (BAT) vorgesehen sind, um den Träger (MEM) zum vorübergehenden Sichern mit Strom zu versorgen.

6. Vorrichtung nach einem der vorangehenden Ansprüche, dadurch gekennzeichnet, daß sie dazu bestimmt ist, in einem Luftfahrzeug untergebracht zu werden.

7. Vorrichtung nach einem der vorangehenden Ansprüche, dadurch gekennzeichnet, daß die Aufzeichnungsmittel (LEC) in einem Gehäuse untergebracht sind.

8. Vorrichtung nach Anspruch 7, dadurch gekennzeichnet, daß sie außerdem aufweist:

- einen ersten Bügel (ETI) in U-Form, dessen Basis dazu ausgelegt ist, die Innenseite des Gehäuses aufzunehmen, und dessen Seitenwände in lösbarer Weise an den Seitenwänden des Gehäuses befestigt sind;

- einen zweiten Bügel (ETS) in U-Form, der in entgegengesetzter Richtung gedreht und dazu ausgelegt ist, die Oberseite des Gehäuses abzudecken; und

- elastische Befestigungsmittel (FEL1 bis FEL4), die zwischen den Seitenwänden des ersten Bügels (ETI) und denjenigen des zweiten Bügels (ETS) angeordnet sind, um in elastischer Weise den ersten Bügel am zweiten Bügel festzulegen.

9. Vorrichtung nach Anspruch 8, dadurch gekennzeichnet, daß die elastischen Befestigungsmittel (FEL1 bis FEL4) mehrere Befestigungselemente umfassen, von denen jeder aufweist:

- eine Schraube (10) mit einem Kopf (14) und einem Schaft (12), wobei der Schaft ein Gewindeende umfaßt, das dazu bestimmt ist, in eine Seitenwand des ersten Bügels (ETI) versenkt zu werden,

- eine erste Unterlegscheibe (14), die auf den Schaft (12) bis zu einer Schulter (18) geschraubt ist, welche an dem Schaft (12) auf einer vorbestimmten Höhe gebildet ist,

- ein einen Puffer bildendes Teil (20), das auf den Schaft zwischen der ersten Unterlegscheibe (165) und der Seitenwand des ersten Bügels geschraubt ist,

- einen Körper (22) in Form eines Tiegels, dessen Ränder an einer Seitenwand des zweiten Bügels (ETS) befestigt sind, wobei der Kopf der Schraube ebenso wie ein Teil des Schafts in dem Körper (22) in schwimmender Weise zwischen ersten und zweiten Befestigungspunkten untergebracht sind, die voneinander mit einer vorbestimmten Distanz beabstandet sind, wobei der Schaft eine Öffnung (30) durchsetzt, die im Boden des Tiegels gebildet ist,

- eine zweite Unterlegscheibe (32), die auf den Teil des Schafts zwischen den ersten und zweiten Befestigungspunkten (26 und 28) geschraubt ist, und

- zumindest erste und zweite Membranen (34 und 36), die jeweils aus einem Material gebildet sind, welches eine elastische Rückstelleigenschaft aufweist, die dazu geeignet ist, die Vibrationen zu dämpfen, denen die Aufzeichnungsmittel bis zu einem vorbestimmten Niveau unterworfen sein können, wobei die ersten und zweiten Membranen (34 und 36) teilweise in dem Körper und andererseits in der zweiten Unterlegscheibe (32) untergebracht sind und jeweils auf den Flächen der zweiten Unterlegscheibe derart anliegen, daß die mechanischen Vibrationen des Schafts zwischen den ersten und zweiten feststehenden Punkten gedämpft werden.

10. Vorrichtung nach einem der vorangehenden Ansprüche, dadurch gekennzeichnet, daß sie außerdem Schutzmittel umfaßt, welche Speichermittel aufweisen, um eine Versorgungsspannung provisorisch zu sichern und um die Versorgungsspannung bei Vorliegen von Stromunterbrechungen einer vorbestimmten Dauer bereitzustellen.

11. Vorrichtung nach einem der vorangehenden Ansprüche, dadurch gekennzeichnet, daß die Tabelle (FAT) zur Beschreibung von Dateien der aufzuzeichnenden Daten ebenso wie die Wurzeltabelle (ROOT) in dem Träger (MEM) zum vorübergehenden Sichern vor jedem Aufzeichnen der Daten auf dem Aufzeichnungsträger (DIS) gesichert werden.

12. Vorrichtung nach einem der vorangehenden Ansprüche, dadurch gekennzeichnet, daß die Steuereinheit dazu ausgelegt ist, das Schreiben der Daten auf den Aufzeichnungsträger (DIS) zu steuern, die vom Träger (MEM) zum vorübergehenden Sichern herrühren, damit die Datei die Einheit der Daten enthält, die vorausgehend in die Datei geschrieben wurden.

13. Vorrichtung nach Anspruch 12, dadurch gekennzeichnet, daß die Steuereinheit dazu ausgelegt ist, unmittelbar nach dem Schreiben des Datenblocks in den Aufzeichnungsträger (DIS) die damit vervollständigte Datei zu schließen, und zwar unter Aktualisierung der Dateizuordnungstabellen (FAT) und der Wurzeltabelle (ROOT).

14. Vorrichtung nach einem der vorangehenden Ansprüche, dadurch gekennzeichnet, daß die Größe der Datenblöcke, die dazu bestimmt sind, in den Aufzeichnungsträger (DIS) geschrieben zu werden, und die von dem Träger (MEM) zur vorübergehenden Sicherung herrühren, in geeigneter Weise gewählt ist.

15. Vorrichtung nach einem der vorangehenden Ansprüche, dadurch gekennzeichnet, daß sie außerdem Wirkmittel umfaßt, um auf die gewonnene Größe einzuwirken, und daß bei Vorliegen einer gewonnenen Größe, die größer als der vorbestimmte Wert ist, die Steuereinheit ein Steuersignal zu den Wirkmitteln liefert, um die gewonnene Größe im wesentlichen unter den vorbestimmten Wert zu reduzieren.

16. Vorrichtung nach Anspruch 15, dadurch gekennzeichnet, daß die Wirkmittel aktive Stoßdämpfer sind.

## Claims

1. Data recording device, comprising:

   ■ an interface (IT) for receiving data (D) to be recorded,
   ■ recording means (LEC) for recording data from an interface (IT) on a recording support (DIS) using magnetic and/or optical and/or magneto-optical technology and comprising a control unit (UT) for monitoring the recording of the data on the recording support (DIS),

   characterised in that it further comprises

   ■ a temporary safeguard support (MEM) of electronic technology, the data (D) from the interface (IT) being recorded temporarily on the temporary safeguard support (MEM) successively as they are received,
   ■ means (AC, TH) for obtaining at least one variable selected relative to a condition of the environment or of a predetermined operation of the recording device or of at least one of its constituent means, and for delivering a datum representing the variable obtained (AO, TO), and
   ■ in that the control unit (UT) comprises a mode of recording in which the variable obtained (AO, TO) is compared to at least one predetermined value (A2, T2), and
   ■ in the presence of a variable obtained which is higher than the predetermined value, no access to the recording support (DIS) is authorised, whereas in the presence of a variable obtained which is lower than or equal to the predetermined value, the data stored temporarily on the temporary safeguard support (MEM) are recorded on the recording support (DIS) provided that access to the recording support is authorised.

2. Device according to claim 1, characterised in that the variable relates to the acceleration undergone by the recording device or by at least one of its constituent means and in that the obtaining means (AC) form an accelerometer disposed according to a geometric relation predetermined with respect to the substantial axes of the recording device, in particular of the recording means (LEC).

3. Device according to claim 1, characterised in that the variable relates to the ambient temperature of the recording device or at least one of its constituent means, in particular recording means (LEC), and in that the obtaining means form a thermometer (TH) disposed according to a geometric relation predetermined with respect to the recording device or one of its constituent means, in particular to the recording means (LEC).

4. Device according to claim 1, characterised in that the datum representing the variable obtained (AO, TO) is derived from data received at the interface.

5. Device according to claim 1, characterised in that the variable relates to the power supply of the device, in that the obtaining means form means for detecting the interruption of current, and in that supply means (BAT) are further provided for supplying power to the temporary safeguard support (MEM).

6. Device according to one of the preceding claims, characterised in that it is intended to be on board an airship.

7. Device according to one of the preceding claims, characterised in that the recording means (LEC) are housed in a box.

8. Device according to claim 7, characterised in that it further comprises:

   ■ a first clamp (ETI) in a U shape, of which the base is intended to receive the lower face of the box, and of which the lateral walls are fixed in a detachable manner to the lateral walls of the box;
   ■ a second clamp (ETS) in a U shape turned in the opposite direction and which is adapted to cover the upper face of the box; and

   ■ resilient fixing means (FEL1 to FEL4) disposed between the lateral walls of the first clamp (ETI) and those of the second clamp (ETS) for fixing in a resilient manner the first clamp to the second clamp.

9. Device according to claim 8, characterised in that the resilient fixing means (FEL1 to FEL4) comprise a plurality of fixing elements, each comprising:

   ■ a screw (10) having a head (14) and a shank (12), the shank comprising a threaded end intended to be countersunk into a lateral wall of the first clamp (ETI),
   ■ a first washer (14) threaded on to the shank (12) up to a shoulder (18) housed on the shank (12) at a predetermined height,
   ■ a member (20) forming a plug threaded on the shank (12) between the first washer (165) and the lateral wall of the first clamp,
   ■ a body (22) in the shape of a pot, whose edges are fixed to a lateral wall of the second clamp (ETS), the head of the screw as well as a portion of the shank being housed in the body (22) in a floating manner between the first and second fixed points spaced apart from one another by a predetermined distance, the shank crossing an aperture (30) formed in the bottom of the pot,
   ■ a second washer (32) threaded on to the part of the shank between the first and second fixed points (26 and 28), and
   ■ at least one of the first and second membranes (34 and 36) each formed of a material having a property of resilient return suitable for damping the vibrations capable of being undergone by the recording means up to a predetermined level, the first and second membranes (34 and 36) being housed in the body on either side of the second washer (32) and bearing respectively on the faces of the second washer so as to dampen the mechanical vibrations of the shank between the first and second fixed points.

10. Device according to one of the preceding claims, characterised in that it comprises furthermore protection means comprising storage means for storing temporarily a supply voltage and capable of transmitting the supply voltage in the presence of power cuts of a predetermined duration.

11. Device according to one of the preceding claims, characterised in that the table of description of files (FAT) of the data to be recorded as well as the root table (ROOT) are safeguarded in the temporary safeguard support (MEM) before every recording of data on the recording support (DIS).

**12.** Device according to one of the preceding claims, characterised in that the control unit is adapted to monitor the writing of data on the recording support (DIS) emanating from the temporary safeguard support (MEM) at the end of the file containing the whole of the data previously written in the file.

**13.** Device according to claim 12, characterised in that the control unit is adapted to close the file completed immediately after writing of the block of data in the recording support (DIS), with updating of file allocation tables (FAT) and root (ROOT).

**14.** Device according to any one of the preceding claims, characterised in that the size of the blocks of data to be written in the recording support (DIS) and emanating from the temporary safeguard support (MEM) is selected in an appropriate manner.

**15.** Device according to any one of the preceding claims, characterised in that it further comprises action means capable of acting on the variable obtained and in that in the presence of a variable obtained which is higher than the predetermined value the control unit transmits a control signal to the action means so as to return the variable obtained to substantially below the predetermined value.

**16.** Device according to claim 15, characterised in that the action means are active dampers.

FIG.1

FIG. 2

FIG. 3

FIG.4

LEC

ETS

FEL 4

AC

ETI

FEL3

**FIG.5**

FEL1

FEL 4

AC

FEL3

FEL 2

**FIG.6**

FIG.7

FIG.8

FIG.9

FIG.10